# EUROPÄISCHE PATENTSCHRIFT

(11) **EP 1 649 195 B1**
(45) Veröffentlichungstag und Bekanntmachung des Hinweises auf die Patenterteilung: **27.06.2007**
(21) Anmeldenummer: 04737394.9
(22) Anmeldetag: 23.07.2004
(51) Int. Cl.: F16H 55/14

(54) **VORRICHTUNG ZUR DREHELASTISCHEN DREHMOMENTÜBERTRAGUNG ZWISCHEN EINER WELLE UND EINEM AUF DER WELLE GELAGERTEN ZAHNRAD**
DEVICE FOR TORSIONALLY-ELASTIC TORQUE TRANSMISSION BETWEEN A SHAFT AND A TOOTHED WHEEL, ARRANGED ON SAID SHAFT
DISPOSITIF SERVANT A LA TRANSMISSION DE COUPLE TORSIO-ELASTIQUE ENTRE UN ARBRE ET UNE ROUE DENTEE MONTEE SUR CE DERNIER

(30) Priorität: 24.07.2003 AT 11722003
(43) Veröffentlichungstag der Anmeldung: 26.04.2006
(73) Patentinhaber: Miba Sinter Austria GmbH, 4663 Laakirchen (AT)
(72) Erfinder: SANDNER, Christian, A-4810 Gmunden (AT)
(74) Vertreter: Hübscher, Helmut
(86) Internationale Anmeldenummer: PCT/AT2004/000264
(87) Internationale Veröffentlichungsnummer: WO 2005/010405

(56) Entgegenhaltungen:
- DE-A- 4 224 626
- DE-U- 9 104 125
- FR-A- 2 721 668
- US-A- 5 267 482

## Beschreibung

Die Erfindung bezieht sich auf eine Vorrichtung zur drehelastischen Drehmomentübertragung zwischen einer Welle und einem auf der Welle gelagerten Zahnrad, das eine Nabe und einen über die Nabe in radialer Richtung unnachgiebig gegenüber der Welle gelagerten Zahnkranz umfaßt, mit zwei einerseits der Welle und anderseits dem Zahnkranz drehfest zugeordneten Kupplungsteilen, die gegeneinander in axialer Richtung vorstehende, auf Lücke versetzte Klauen aufweisen, und mit zwischen den Klauen angeordneten, elastomeren Dämpfungskörpern, die die beiden Kupplungsteile gegeneinander ausschließlich in Umfangsrichtung abstützen, wobei der drehfest mit der Welle verbundene Kupplungsteil axial an das Zahnrad anschließt.

Ungleichmäßige Antriebs- und Abtriebsbedingungen sowie die wechselnden Verhältnisse beim Zahneingriff führen zu schwankenden Drehmomentbelastungen der Zahnräder eines Zahnradgetriebes. Damit diese Schwingungsanregungen nicht zu unerwünschten, die Belastbarkeit der Zahnräder beeinträchtigenden oder zu Geräuschen anlaßgebenden Schwingungen der Zahnräder führen, werden diese Schwingungen mit Hilfe von drehelastischen Kupplungen gedämpft. Um in diesem Zusammenhang aufwendige Kupplungen zu vermeiden, ist es bekannt (DE 101 16 236 A1, US 5 927 149 A), Nabe und Zahnkranz der Zahnräder als voneinander gesonderte Bauteile auszubilden und miteinander drehelastisch zu verbinden. Zu diesem Zweck bilden Nabe und Zahnkranz jeweils einen Kupplungsteil mit radial gegen den anderen Kupplungsteil vorstehenden Klauen, wobei die Klauen der beiden Kupplungsteile gegeneinander auf Lücke versetzt sind und unter Freilassung eines druchgehenden Spaltes ineinandergreifen. Da der Spalt zwischen den Klauen der beiden Kupplungsteile mit einem elastomeren Werkstoff ausgefüllt wird, werden zwischen Zahnkranz und Nabe auftretende Drehschwingungen durch die elastomere Zwischenlage zwischen den einander gegenüberliegenden Flanken der ineinandergreifenden Klauen gedämpft.

Bei diesen bekannten Konstruktionen wird der Zahnkranz gegenüber der Nabe nicht nur in Umfangsrichtung, sondern auch in radialer Richtung über elastomere Formkörper abgestützt, was unter Umständen zu zusätzlichen Schwingungen führt und sich nachteilig auf den Zahneingriff auswirken kann.

Um bei einem Stelltrieb beispielsweise zum Verlagern von Schiebefenstern eines Kraftfahrzeuges zwischen zwei Endlagen den Anschlag in den Endlagen zu dämpfen, ist darüber hinaus ein Schneckengetriebe aus der gattungsgemäßen DE 91 04 152 U1 bekannt, dessen radial unnachgiebig, aber drehbar auf einer Abtriebswelle abgestütztes Schneckenrad über eine drehelastische Kupplung angetrieben wird, die zwei einerseits der Welle und anderseits dem Schneckenrad drehfest zugeordnete Kupplungsteile mit gegeneinander in axialer Richtung vorstehenden, auf Lücke versetzten Klauen aufweist. Die beiden Kupplungsteile sind gegeneinander in Umfangsrichtung durch zwischen den Klauen angeordnete elastomere Dämpfungskörper abgestützt, so daß sich Anschlagstöße mit einfachen konstruktiven Mitteln dämpfen lassen. Über die elastomeren Dämpfungskörper lassen sich jedoch keine feinfühligen Abstimmungen des Dämpfungsverhaltens erreichen.

Der Erfindung liegt somit die Aufgabe zugrunde, eine Vorrichtung zur drehelastischen Drehmomentübertragung zwischen einer Welle und einem auf der Welle gelagerten Zahnrad der eingangs geschilderten Art so auszugestalten, daß die Dämpfung von Drehschwingungen mit einfachen konstruktiven Mitteln feinfühlig eingestellt werden kann.

Die Erfindung löst die gestellte Aufgabe dadurch, daß der wellenseitige Kupplungsteil einen radial abstehenden Flansch mit einem Reibbelag auf einer ringförmigen Anlagefläche für das Zahnrad aufweist.

Da die ringförmige Anlagefläche des wellenseitigen Kupplungsteiles einen Reibbelag trägt, kann ein zusätzlicher Einfluß auf das Dämpfungsverhalten genommen werden, um eine an die jeweiligen Verhältnisse angepaßte Dämpfung der zwischen dem Zahnkranz und der Welle auftretenden Drehschwingungen zu erreichen. Mit Hilfe des Reibbelages können folglich bestimmte Reibungsverhältnisse zwischen dem Zahnrad und dem wellenseitigen Kupplungsteil vorgegeben werden, so daß sich der Dämpfungskraft der Dämpfungskörper eine Reibkraft überlagert, die das Dämpfungsverhalten der Vorrichtung mitbestimmt und daher eine zusätzliche Einflußnahme auf die drehelastische Drehmomentübertragung zwischen der Welle und dem Zahnrad erlaubt. Über die ringförmige Anlagefläche für das Zahnrad kann außerdem die achsnormale Ausrichtung des Zahnrades sichergestellt werden, selbst wenn die axiale Erstreckung der Nabe vergleichsweise klein ausfällt.

Um in axialer Richtung eine gedrängte Bauweise zu erzielen, kann die Nabe des Zahnrades auf einer Stirnseite Ausnehmungen zur Aufnahme der Klauen des anliegenden Kupplungsteiles der Welle aufweisen und zwischen diesen Ausnehmungen die Klauen des nabenseitigen Kupplungsteiles bilden.

Die zum Andrücken des Zahnrades an den Reibbelag erforderliche Anpreßkraft kann auf unterschiedliche Weise zur Verfügung gestellt werden. Eine einfache Möglichkeit ergibt sich dadurch, daß die Klauen des wellenseitigen Kupplungsteiles die Nabe in Durchtrittsausnehmungen durchsetzen und an ihren Durchtrittsenden einen Stützring für eine das Zahnrad axial beaufschlagende Tellerfeder tragen. Dieser Stützring, der mit den Durchtrittsenden der Klauen des wellenseitigen Kupplungsteiles beispielsweise durch ein Punktschweißen verbunden werden kann, stellt ein dem wellenseitigen Kupplungsteil zugehöriges Widerlager für die Beaufschlagungsfeder des Zahnrades dar, das aufgrund der Vorspannung der Tellerfeder in axialer Richtung gegen den wellenseitigen Kupplungsteil gedrückt wird.

Da die elastomeren Dämpfungskörper zwischen den Klauen der beiden Kupplungsteile lediglich in Umfangsrichtung zwischen den ineinandergreifenden Klauen wirksam werden, können voneinander getrennte Dämpfungskörper eingesetzt werden. Einfachere Montagebedingungen ergeben sich allerdings, wenn die Dämpfungskörper miteinander zu einer Baueinheit verbunden sind, weil in diesem Fall alle Dämpfungskörper gemeinsam gehandhabt werden können.

In der Zeichnung ist der Erfindungsgegenstand beispielsweise dargestellt. Es zeigen
- Fig. 1: eine erfindungsgemäße Vorrichtung zur drehelastischen Drehmomentübertragung zwischen einer Welle und einem auf der Welle gelagerten Zahnrad in einem vereinfachten Axialschnitt,
- Fig. 2: diese Vorrichtung in einem Schnitt nach der Linie II-II der Fig. 1 und
- Fig. 3: eine zum Teil aufgerissene Seitenansicht einer Baueinheit der zu einem Ring zusammengefaßten Dämpfungskörper gemäß dem Ausführungsbeispiel.

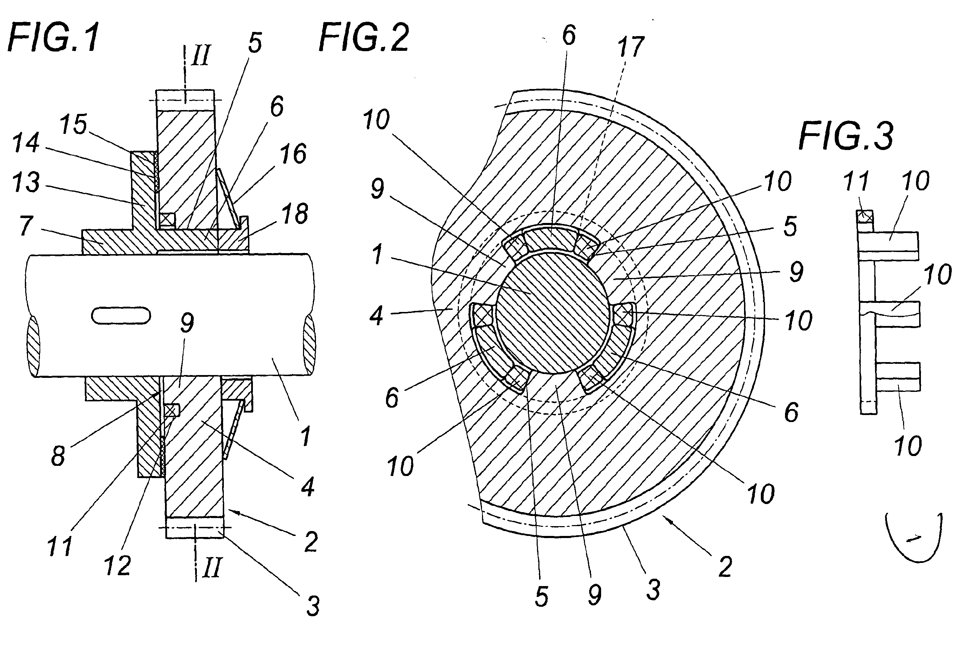

Die dargestellte Vorrichtung gemäß den Fig. 1 und 2 weist eine Welle 1 mit einem auf der Welle 1 gelagerten Zahnrad 2 auf, das einen Zahnkranz 3 und eine Nabe 4 bildet, die mit dem Zahnkranz 3 drehfest verbunden ist und gemäß dem Ausführungsbeispiel zusammen mit dem Zahnkranz aus einem Formkörper besteht, was jedoch nicht zwingend ist. Die Nabe 4 ist über einen Gleitsitz drehbar auf der Welle 1 gelagert und weist auf einer Stirnseite einen Kranz von Ausnehmungen 5 zur Aufnahme von Klauen 6 eines Kupplungsteiles 7 auf, der drehfest mit der Welle 1 verbunden ist. Dieser Kupplungsteil 7 wirkt mit einem durch die Nabe 4 gebildeten Kupplungsteil 8 zusammen, dessen Klauen 9 sich zwischen den Ausnehmungen 5 ergeben. Die Anordnung ist dabei so getroffen, daß die gegeneinander axial vorstehenden Klauen 6, 9 der beiden Kupplungsteile 7, 8 zueinander auf Lücke versetzt sind und ineinander greifen, wie dies der Fig. 2 entnommen werden kann. Zwischen den Klauen 6, 9 der beiden Kupplungsteile 7, 8 sind elastomere Dämpfungskörper 10 eingespannt, die die Kupplungsteile 7, 8 in Umfangsrichtung gegeneinander abstützen. Zur einfacheren Montage sind diese Dämpfungskörper 10 durch einen Verbindungsring 11 zu einer Baueinheit zusammengefaßt, der jedoch hinsichtlich der Drehmomentübertragung keine Funktion hat. Um diesen Verbindungsring 11 platzsparend unterzubringen, ist in der Nabe 4 eine Ringnut 12 vorgesehen, in die der Verbindungsring 11 eingreift.

Der Kupplungsteil 7 ist mit einem radial abstehenden Ringflansch 13 versehen, der eine ringförmige Anlagefläche 14 für das Zahnrad 2 bildet. Der wellenfeste Kupplungsteil 7 trägt auf der ringförmigen Anlagefläche 14 einen Reibbelag 15, um Einfluß auf die Verdrehung des Zahnrades 2 gegenüber dem Kupplungsteil 7 und damit auf das Dämpfungsverhalten nehmen zu können. Damit eine vorgegebene Reibkraft zwischen dem Reibbelag 15 und dem Zahnrad 2 durch einen entsprechenden Anpreßdruck gewährleistet werden kann, ist eine Tellerfeder 16 vorgesehen, mit der das Zahnrad 12 axial beaufschlagt wird. Das dem Kupplungsteil 7 zugehörige Widerlager für die Tellerfeder 16 wird durch einen Stützring 17 gebildet, der mit den Klauen 6 des Kupplungsteiles 7 verbunden ist, beispielsweise durch eine Punktschweißung. Zu diesem Zweck durchsetzen die Klauen 6 die Nabe 4 des Zahnrades 2 in den Ausnehmungen 5 der Nabe 4, wie dies aus der Fig. 1 ersichtlich wird. Aufgrund dieser Klauenausbildung erstrecken sich auch die Dämpfungskörper 10 zwischen den Klauen 6, 9 über die axiale Erstreckung der Nabe 4, was einen entsprechend versetzten Verbindungsring 11 erfordert, wie dies die Fig. 3 zeigt.

Die Drehmomentübertragung zwischen der Welle 1 und dem Zahnkranz 3 erfolgt über die Dämpfungskörper 10 zwischen den Klauen 6, 9 der beiden Kupplungsteile 7, 8, wobei auftretende Drehschwingungen gedämpft werden, ohne die radiale Festlegung des Zahnkranzes 3 gegenüber der Welle 1 zu beeinträchtigen, auf der ja das Zahnrad 2 über die Nabe 4 drehbar gelagert, aber radial unnachgiebig abgestützt ist. der Reibbelag 15 dient lediglich zur feinfühligen Einstellung des Dämpfungsverhaltens.

## Patentansprüche

1. Vorrichtung zur drehelastischen Drehmomentübertragung zwischen einer Welle (1) und einem auf der Welle (1) gelagerten Zahnrad (2), das eine Nabe (4) und einen über die Nabe (4) in radialer Richtung unnachgiebig gegenüber der Welle (1) gelagerten Zahnkranz (3) umfaßt, mit zwei einerseits der Welle (1) und anderseits dem Zahnkranz (3) drehfest zugeordneten Kupplungsteilen (7, 8), die gegeneinander in axialer Richtung vorstehende, auf Lücke versetzte Klauen (6, 9) aufweisen, und mit zwischen den Klauen (6, 9) angeordneten, elastomeren Dämpfungskörpern (10), die die beiden Kupplungsteile (7, 8) gegeneinander ausschließlich in Umfangsrichtung abstützen, wobei der drehfest mit der Welle (1) verbundene Kupplungsteil (7) axial an das Zahnrad (2) anschließt, **dadurch gekennzeichnet, daß** der wellenseitige Kupplungsteil (7) einen radial abstehenden Flansch (13) mit einem Reibbelag (15) auf einer ringförmigen Anlagefläche (14) für das Zahnrad (2) aufweist.

2. Vorrichtung nach Anspruch 1, **dadurch gekennzeichnet, daß** die Nabe (4) des Zahnrades (2) auf einer Stirnseite Ausnehmungen (5) zur Aufnahme der Klauen (6) des anliegenden Kupplungsteiles (7) der Welle (1) aufweist und zwischen diesen Ausnehmungen (5) die Klauen (9) des nabenseitigen Kupplungsteiles (8) bildet.

3. Vorrichtung nach Anspruch 1 oder 2, **dadurch gekennzeichnet, daß** die Klauen (6) des wellenseitigen Kupplungsteiles (7) die Nabe (4) in Durchtrittsausnehmungen (5) durchsetzen und an ihren Durchtrittsenden einen Stützring (17) für eine das Zahnrad (2) axial beaufschlagende Tellerfeder (16) tragen.

4. Vorrichtung nach einem der Ansprüche 1 bis 3, **dadurch gekennzeichnet, daß** die Dämpfungskörper (10) miteinander zu einer Baueinheit verbunden sind.

## Claims

1. Device for torsionally elastic torque transmission between a shaft (1) and a gearwheel (2) mounted on the shaft (1) which comprises a hub (4) and a ring gear (3) mounted in relation to the shaft (1) in an unyielding way in radial direction via the hub (4), with two coupling parts (7, 8) assigned on the one hand to the shaft (1) and on the other hand to the ring gear (3) which comprise claws (6, 9) offset by a gap projecting against each other in radial direction, and with elastomer damping bodies (10) arranged between the claws (6, 9) which support the two coupling parts (7, 8) against each other solely in the peripheral direction, whereby the coupling part (7) connected in a rotationally secure way to the shaft (1) connects axially to the gearwheel (2), **characterised in that** the shaft-side coupling part (7) comprises a radially standing away flange (13) with a friction lining (15) on an annular abutment surface (14) for the gearwheel (2).

2. Device according to claim 1, **characterised in that** the hub (4) of the gearwheel (2) comprises, on an end face, recesses (5) for receiving the claws (6) of the abutting coupling part (7) of the shaft (1) and forms between these recesses (5) the claws (9) of the hub-side coupling part (8).

3. Device according to claim 1 or 2, **characterised in that** the claws (6) of the shaft-side coupling part (7) go through the hub (4) in passage recesses (5) and carry on their passage ends a support ring (17) for a disc spring (16) axially impacting the gearwheel (2).

4. Device according to one of the claims 1 to 3, **characterised in that** the damping bodies (10) are connected to each other to form a structural unit.

## Revendications

1. Dispositif servant à la transmission de couple torsio-élastique entre un arbre (1) et une roue dentée (2) montée sur l'arbre (1), la roue dentée comprenant un moyeu (4) et une couronne dentée (3), montée sur le moyeu (4) avec une impossibilité de déformation en direction radiale par rapport à l'arbre (1), avec deux parties d'accouplement (7, 8) associées de façon assujettie en rotation, d'une part, à l'arbre (1) et, d'autre part, à la couronne dentée (3), qui présentent des griffes (6, 9) décalées en laissant subsister des vides, placées en saillie les unes par rapport aux autres en direction axiale et avec des corps d'amortissement (10) en élastomère disposés entre les griffes (6, 9), qui soutiennent les deux parties d'accouplement (7, 8) l'une par rapport à l'autre exclusivement dans la direction périphérique, sachant que la partie d'accouplement (7) reliée de façon assujettie en rotation à l'arbre (1) se raccorde axialement à la roue dentée (2), **caractérisé en ce que** la partie d'accouplement (7) située côté arbre présente une bride (13) en saillie radialement, avec une garniture de friction (15), sur une surface d'appui (14) annulaire pour la roue dentée (2).

2. Dispositif selon la revendication 1, **caractérisé en ce que** le moyeu (4) de la roue dentée (2) présente, sur une face frontale, des évidements (5), pour recevoir les griffes (6) de la partie d'accouplement (7) en appui de l'arbre (1) et forme, entre ces évidements (5), les griffes (9) de la partie d'accouplement (8) située côté moyeu.

3. Dispositif selon la revendication 1 ou 2, **caractérisé en ce que** les griffes (6) de la partie d'accouplement (7) côté arbre traversent le moyeu (4) dans des évidements de passage (5) et portent, à leurs extrémités de passage, une bague d'appui (17) pour un ressort à disque (16) sollicitant axialement la roue dentée (2).

4. Dispositif selon l'une des revendications 1 à 3, **caractérisé en ce que** les corps d'amortissement (10) sont reliés ensemble pour former un ensemble de construction.
